Europäisches Patentamt

European Patent Office

Office européen des brevets

(19)

(11) Veröffentlichungsnummer : **0 365 547 B1**

## (12) EUROPÄISCHE PATENTSCHRIFT

(45) Veröffentlichungstag der Patentschrift :
**19.02.92 Patentblatt 92/08**

(51) Int. Cl.$^5$ : **B23F 5/04, B23F 23/12**

(21) Anmeldenummer : **88904967.2**

(22) Anmeldetag : **08.06.88**

(86) Internationale Anmeldenummer :
**PCT/EP88/00505**

(87) Internationale Veröffentlichungsnummer :
**WO 88/09706 15.12.88 Gazette 88/27**

(54) SCHLEIFMASCHINE ZUM KONTINUIERLICHEN WÄLZSCHLEIFEN VON ZAHNRÄDERN.

(30) Priorität : **13.06.87 DE 3719865**

(43) Veröffentlichungstag der Anmeldung :
**02.05.90 Patentblatt 90/18**

(45) Bekanntmachung des Hinweises auf die
Patenterteilung :
**19.02.92 Patentblatt 92/08**

(84) Benannte Vertragsstaaten :
**CH DE FR GB IT LI**

(56) Entgegenhaltungen :
**CH-A- 451 658**
**DE-A- 3 150 961**
**DE-B-27 445 62**
**DE-C- 2 934 754**
**US-A- 2 759 333**

(73) Patentinhaber : **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder : **RIHA, Werner
Schaldinger Stra e 16
W-8390 Passau 18 (DE)**

EP 0 365 547 B1

Jouve, 18, rue Saint-Denis, 75001 PARIS

## Beschreibung

Die Erfindung betrifft eine Schleifmaschine zum kontinuierlichen Wälzschleifen von Zahnrädern nach dem Oberbegriff des Anspruchs 1.

Eine hohe Verzahnungsqualität ist die Voraussetzung für eine hohe Leistungsfähigkeit von Zahnrädern sowie für eine hohe Übertragungsgenauigkeit, große Leistungsdichte, hohe Tragfähigkeit und geringe Geräuschentwicklung. Das Härten von Zahnrädern führt einerseits zu hoher Tragfähigkeit der Zahnflanken, bringt aber andererseits Verzug mit sich. Deswegen wird seit einiger Zeit für das Fertigbearbeiten von Zahnrädern, auch von großen Zahnrädern, das kontinuierliche Wälzschleifen immer mehr eingesetzt, weil damit die gewünschte Verzahnungsqualität nach dem Härten erreicht werden kann. Ferner können Zahnflankenkorrekturen geschliffen werden.

Die Normalausrüstung der zur Zeit in der Produktion eingesetzten Wälzschleifmaschinen und die angewendeten Bearbeitungsbedingungen machen den Schleifprozeß sehr zeitund kostenintensiv.

Aus US-A 17 59 333 ist ein Verfahren zum kontinuierlichen Wälzschleifen von Zahnrädern bekannt. Während des Schleifens kann die Schleifschnecke kontinuierlich abgerichtet werden. Das Abrichtwerkzeug ist mit dem Antrieb der Schleifschnecke mechanisch verbunden.

Die Evolventenform der Zahnflanke wird durch das Abwälzen von Schleifschnecke und Zahnrad erzeugt. Während des Schleifvorgangs bewegt sich das Werkstück entlang seiner Drehachse. Die Schleifschnecke wird am oberen und am unteren Umkehrpunkt schrittweise zugestellt. Der Vorschub der Schleifschnecke kann innerhalb fester Grenzen stufenlos eingestellt werden. Der Schleifprozeß verläuft kontinuierlich. Er wird durch keine Teilvorgänge unterbrochen.

Um ständig frische Schleifzonen zum Eingriff mit dem Zahnrad zu bringen, wird die Schleifschnecke entlang ihrer Drehachse am Zahnrad vorbei geführt. Die Schleifschnecke kann mittels einer rotierenden Scheibe abgerichtet werden. Das genannte Verfahren ist von Hand durchzuführen und somit langsam und teuer.

Der Erfindung liegt die Aufgabe zugrunde, die Bearbeitungszeit und Kosten für das kontinuierliche Wälzschleifen eines Zahnrads zu senken und die Voraussetzung für ein automatisches Beschicken einer Wälzschleifmaschine zu schaffen.

Diese Aufgabe wird erfindungsgemäß dadurch gelöst, daß die Schleifschnecke radial auf das Werkstück zu und entlang einer vertikalen Achse parallel zur Werkstückachse verschoben werden kann und ein spiralverzahnter Hypoidantrieb das Werkstück antreibt und dieser Hypoidantrieb mit dem Drehantrieb der Schleifschnecke mechanisch verbunden ist und das Werkstück vor Beginn des Schleifens automatisch positioniert wird.

Mit diesen Maßnahmen wird insgesamt eine einfache und eindeutige Zuordnung der Position von Schleifschnecke und Zahnrad erreicht und damit eine wesentliche Voraussetzung, um eine Wälzschleifmaschine automatisch beschicken zu können, geschaffen. Da das Zahnrad mit der Schleifschnecke durch einen spielfreien mechanischen Getriebezug verbunden ist, ist eine eindeutige Zuordnung zwischen Aufspannvorrichtung des Zahnrads und der Schleifschnecke gegeben.

Aus der o. g. Schrift ist ein Zahnradbearbeitungsverfahren bekannt mit einem gemeinsamen Antrieb für das Werkzeug und das Werkstück.

Erfindungsgemäß wird ein Getriebezug zwischen dem spiralverzahnten Hypoidantrieb des Werkstücks und dem Werkzeugantrieb vorgeschlagen, um die beim kontinuierlichen Wälzschleifen auftretenden hohen Drehzahlen von 1 900 U/min übertragen zu können.

Der Betrieb einer Schleifschnecke, die während des automatischen Bearbeitungsvorganges ohne Unterbrechung ihre Drehzahl beibehält, ist wesentlich wirtschaftlicher als der Betrieb einer Schleifschnecke mit großer Masse, die jedesmal, wenn von einer Bedienungsperson ein neues Zahnrad eingelegt wird, angehalten und wieder beschleunigt werden muß, da die Unfallverhütungsvorschriften verlangen, daß die Schleifschnecke still steht, wenn ein Eingriff in die Wälzschleifmaschine durch das Bedienungspersonal erfolgt.

Vorzugsweise wird die Winkellage der Zahnradlücken eines automatisch zugeführten Zahnrads bezüglich der Schleifschneckenwindungen mit einer Positionierungsvorrichtung in Form eines Positionierungsfingers, der z. B. elektrisch betätigt wird, ausgerichtet. Derartige Positioniereinrichtungen sind an sich bekannt. Das Verfahren zum kontinuierlichen Wälzschleifen eines Zahnrads kommt dann ohne jeglichen Eingriff einer Bedienungsperson aus.

Eine vorteilhafte Ausführung der vorliegenden Erfindung ist in der mechanischer. Verbindung des Antriebs des ebenfalls schneckenförmigen diamantbestückten Abrichtwerkzeugs mit dem Antrieb der Schleifschnecke zu sehen. Die Übersetzung zwischen dem Antrieb der Schleifschnecke und dem Antrieb des Abrichtwerkzeugs kann so ausgelegt sein, daß das Abrichtwerkzeug im Gegensinn zur Schleifschnecke dreht. Vorzugsweise ist das Abrichtwerkzeug senkrecht über der Drehachse der Schleifschnecke angeordnet, so daß das Abrichtwerkzeug über eine starre Verbindung mit der Schleifschnecke Zustellbewegungen der Schleifschnecke zum Werk-

EP 0 365 547 B1

stück mitmacht und der einzige Freiheitsgrad, den das Abrichtwerkzeug hat, radial zur Schleifschnecke ist, um kontinuierlich während des Schleifvorgangs die Schleifschnecke abzurichten.

Insgesamt ist das kontinuierliche Wälzschleifen von Zahnrädern gemäß der vorliegenden Erfindung schneller und präziser, schafft die Voraussetzung für die Vollautomatisierung des Bearbeitungsvorgangs und beschränkt damit den Einsatz von Bedienungspersonal auf reine Überwachungsfunktion.

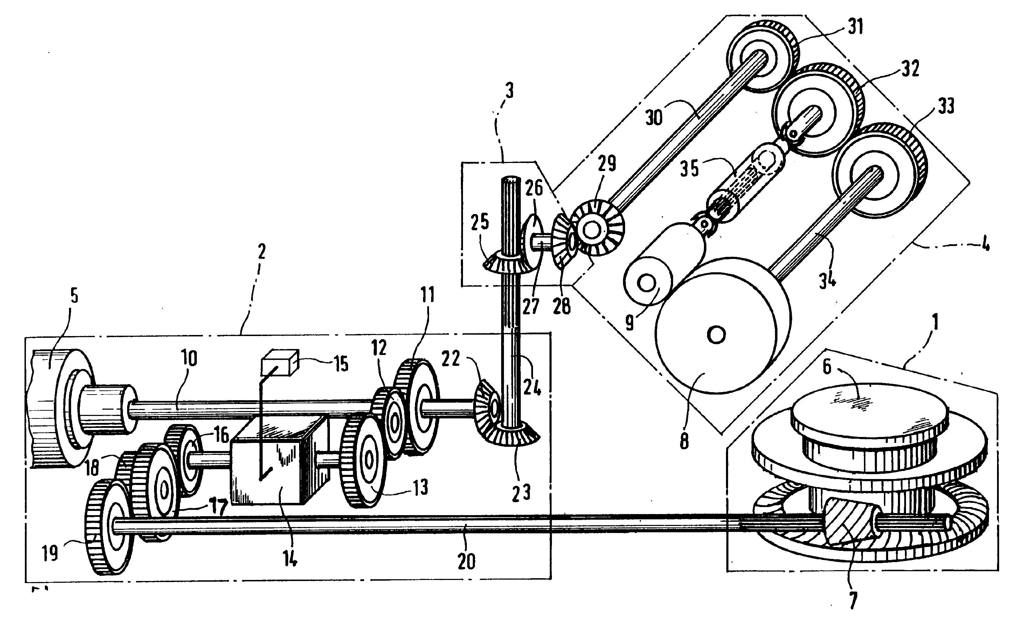

In der Zeichnung ist ein Ausführungsbeispiel der Erfindung dargestellt.

Die Vorrichtung zum kontinuierlichen Wälzschleifen besteht aus vier Bauteilgruppen:

A. Maschinenbett 1 mit dem aufgespannten Werkstück 6 und dem spiralverzahnten Hypoidantrieb 7;

B. Maschinenständer 2 mit dem Antriebsmotor 5 und Übertragungsgliedern;

C. Schleifschlitten 3 mit Kegelradgruppe;

D. Schleifkopf 4 mit der Schleifschnecke 8, dem Abrichtwerkzeug 9 und Übertragungsgliedern.

Konstruktions-Beschreibung:

Ein Motor 5 treibt über eine Welle 10 und drei Stirnräder 11, 12, 13 ein Spiralrichtungsdifferential 14 an. Eine NC-Steuerung 15 kontrolliert das Spiralrichtungsdifferential 14 und verändert die Drehung am Ausgangszahnrad 16 des Spiralrichtungsdifferentials 14. Vier Zähnezahlwechselräder 16, 17, 18, 19 übersetzen die Drehzahl am Ausgang des Spiralrichtungsdifferentials 14 zur Drehzahl der Teleskopwelle 20. Das Übersetzungsverhältnis der Zähnezahlwechselräder 16, 17, 18, 19 hängt von der Drehzahl der Schleifschnecke 8 und der Anzahl der Zähne des Werkstückes 6 ab. Ein spiralverzahnter Hypoidantrieb 7 sorgt für eine nahezu spielfreie mechanische Verbindung des Maschinenbetts 1 und des darauf aufgespannten Werkstücks 6 mit der Teleskopwelle 20. Ein (nicht dargestellt) Positionierungsfinger, der elektrisch, mechanisch oder druckmittelbetätigt sein kann und fest mit dem Maschinenbett 1 verbunden ist, ist so angeordnet, daß er zwischen zwei Zähne des zu bearbeitenden Werkstückes 6 einrücken kann und eine Zahnradlücke auf Position mit den Schleifschneckenwindungen bringt, bevor das Werkstück 6 auf dem Maschinenbett 1 festgespannt wird.

Der Motor 5 treibt über Kegelräder 22, 23 und eine vertikale Welle 24 eine Kegelradgruppe an. Die Kegelradgruppe besteht aus zwei mit zueinander senkrechten Wirkungslinien ineinander greifenden Kegelrädern 25, 26 und ist über eine Welle 27 mit zwei weiteren ebenfalls mit zueinander senkrechten Wirkungslinien ineinander greifenden Kegelrädern 28, 29 verbunden. Vom Kegelrad 29 wird die Drehbewegung über eine Welle 30 an Stirnräder 31, 32, 33 weitergeleitet. Die Drehgeschwindigkeiten der Stirnräder 31, 32, 33 hängen von dem durch deren Zähnezahl bestimmten Übersetzungsverhältnis ab. Das Stirnrad 33 ist über eine starre Welle 34 mit der Schleifschnecke 8 verbunden. Das Stirnrad 32 ist über eine schwenkbare Teleskopwelle 35, die vorzugsweise NC-gesteuert verschwenkt wird, mit dem Abrichtwerkzeug 9 verbunden.

Funktionsbeschreibung:

Alle Bewegungen, die zum kontinuierlichen Wälzschleifen des Werkstückes 6 nötig sind, werden von der Schleifschnecke 8 ausgeführt. Diese Bewegungen sind vorzugsweise NC-gesteuert. Das Maschinenbett 1 bleibt ortsfest. Die Bewegungen, die die Schleifschnecke 8 für die Bearbeitung eines Werkstückes 6 ausführt, teilen sich in drei Komponenten auf:

X. Translation radial zum Werkstück;

Y. Translation parallel zur Werkstückachse;

Z. Rotation zum Schleifen von Schrägverzahnungen.

Die Translation der Schleifschnecke radial zum Werkstück wird vom Maschinenständer 2, Schleifkopf 4 und Schleifschlitten 3 gemeinsam ausgeführt. Der spiralverzahnte Hypoidantrieb 7 ist hierzu verschieblich auf der Welle 20. Die Vertikalbewegung, parallel zur Werkstückachse, von Schleifkopf 4 und Schleifschlitten 3 relativ zu Maschinenständer 2 und Maschinenbett 1 führt die Schleifschnecke 8 entlang der Zahnradflanke. Das Kegelrad 25 ist hierzu verschieblich auf der vertikalen Welle 29 angebracht. Die Rotation der Schleifschnecke 8 wird vom Schleifkopf 4 ausgeführt, relativ zu Schleifschlitten 3, Maschinenständer 2 und Maschinenbett 1.

Die Schleifschnecke 10 wird vom Antriebsmotor 5 mit ca. 1 900 U/min angetrieben.

Das Werkstück 6 wird, nachdem es vorzugsweise automatisch im Maschinenbett 1 eingelegt ist, zunächst positioniert bevor es im Maschinenbett 1 festgespannt wird. Der Positionierfinger (nicht dargestellt), der in einer definierten Lage auf dem Maschinenbett 1 angebracht ist und der sich mit dem Werkstück 6 dreht, korrigiert die Lage des Werkstückes 6 nach dem Einlegen im Maschinenständer 1 so, daß die Zahnradlücken mit den Schleifschneckenwindungen in Eingriff kommen können. Der spiralverzahnte Hypoidantrieb 7 des Maschinenbetts 1 ist über eine Teleskopwelle 20 verschieblich mit dem Maschinenständer 2 verbunden, um die Schleifschneckenwindungen in die Zahnradlücken einzuführen, ohne die Position des Hypoidantriebs 7 relativ zum Maschinenbett 1 zu verändern. Das Spiralrichtungsdifferential 14 überlagert mit einer NC-Steuerung 15 der

3

Drehbewegung des Maschinenbetts 1 einen Vor- oder Nachlauf in Abhängigkeit vor Parametern, die sich aus der Geometrie der zu schleifenden Zahnradflanken ergeben.

Das Spiralrichtungsdifferential 14 erlaubt es, das Maschinenbett 1 so anzutreiben, daß Schrägverzahnungen geschliffen werden können.

Während des kontinuierlichen Wälzschleifvorganges wird die Schleifschnecke 8 kontinuierlich abgerichtet. Die NC-gesteuerte gelenkige Teleskopwelle 35 führt das Abrichtwerkzeug 9 kontinuierlich während des Schleifens dem abnehmenden Durchmesser der Schleifschnecke 8 nach. Mit abnehmendem Durchmesser der Schleifschnecke 8 ändert sich die Steigung der Windungen auf der Schleifschnecke 8. In regelmäßigen Abständen korrigiert eine NC-Steuerung den Winkel des Abrichtwerkzeugs 9 zur Schleifschnecke 8, so daß die Schleifschnecke 8 auch mit abnehmendem Durchmesser auf ihn abgerichtet wird.

Bezugszeichen

1 Maschinenbett
2 Maschinenständer
3 Schleifschlitten
4 Schleifkopf
5 Antriebsmotor
6 Werkstück/Zahnrad
7 Hypoidantrieb
8 Schleifschnecke
9 Abrichtwerkzeug
10 Welle
11 Stirnrad
12 Stirnrad
13 Stirnrad
14 Spiralrichtungsdifferential
15 Steuerung
16 Stirnrad
17 Stirnrad
18 Stirnrad
19 Stirnrad
20 Teleskopwelle
21 Positionierung
22 Kegelrad
23 Kegelrad
24 Welle
25 Kegelrad
26 Kegelrad
27 Schwenkachse
28 Kegelrad
29 Kegelrad
30 Welle
31 Stirnrad
32 Stirnrad
33 Stirnrad
34 Welle
35 gelenkige Teleskopwelle

**Patentansprüche**

1. Schleifmaschine zum kontinuierlichen Wälzschleifen von einem Werkstück, insbesondere von einem Zahnrad, das auf einem Maschinenbett aufgespannt und um seine Achse drehbar angetrieben ist, wobei eine Schleifschnecke um ihre Achse drehbar angetrieben ist und in einer durch ihre Achse gehenden senkrechten Ebene gekippt werden kann und mit einer Vorrichtung zum kontinuierlichen Arbrichten der Schleifschnecke während des Schleifens, dadurch **gekennzeichnet**, daß die Schleifschnecke (8) radial auf das Werkstück (6) zu und entlang einer vertikalen Achse parallel zur Werkstückachse verschoben werden kann und ein spiralverzahnter Hypoidantrieb (7) das Werkstück (6) antreibt und dieser Hypoidantrieb mit dem Drehantrieb der Schleifschnecke mechanisch verbunden ist und das Werkstück vor Beginn des Schleifens automatisch positioniert wird.

2. Schleifmaschine nach Anspruch 1, dadurch **gekennzeichnet** , daß mit einem schneckenförmigen diamantbestückten Abrichtwerkzeug (9) abgerichtet wird, das senkrecht zur Verbindungslinie zwischen Schleifschneckenmitte und Werkstückmitte über der Drehachse der Schleifschnecke (8) angeordnet ist.

3. Schleifmaschine nach Anspruch 1, dadurch **gekennzeichnet** , daß zum Schleifen einer Schrägverzahnung dem Drehantrieb des Werkstücks (6) durch ein Spiralrichtungsdifferential (14) ein Vor- oder Nachlauf überlagert wird.

## Claims

1. Grinding machine for the continuous generation of a workpiece, in particular a gear wheel, which is clamped on a bench and rotated about its axis, in which a grinding worm is rotated about its axis and can be tilted in a vertical plane passing through its axis, and a device is provided for continuously dressing the grinding worm during grinding, characterised in that the grinding worm (8) can be moved radially up to the workpiece (6) and along a vertical axis parallel to the workpiece axis, a spiral-toothed hypoid drive (7) drives the workpiece (6) and is mechanically connected to the rotary drive of the grinding worm, and the workpiece is automatically positioned before grinding commences.

2. Grinding machine according to claim 1, characterised in that dressing is carried out by a worm-shaped, diamond-tipped dressing tool (9), which is arranged perpendicular to the connecting line between the grinding worm centre and the workpiece centre above the axis of rotation of the grinding worm (8).

3. Grinding machine according to claim 1, characterised in that an advance or a retard is superimposed on the rotary drive of the workpiece (6) by a spiral directional differential (14) in order to grind helical gearing.

## Revendications

1. Rectifieuse pour la rectification continue en développante d'une pièce, notamment d'une roue dentée, qui est fixée sur un plateau de la rectifieuse et entraînée en rotation autour de son axe, comportant une meule hélicoïdale entraînée en rotation autour de son axe et capable de basculer dans un plan perpendiculaire à son axe, et un dispositif pour le dressage continu de la meule pendant le meulage, **caractérisée** en ce que la meule (8) peut être déplacée radialement vers la pièce (6) et le long d'un axe vertical parallèle à l'axe de la pièce, en ce qu'une transmission hypoïde (7) à denture hélicoïdale entraîne la pièce (6) et est raccordée mécaniquement à l'entraînement de rotation de la meule, et en ce que la pièce est positionnée automatiquement avant le début du meulage.

2. Rectifieuse selon la revendication 1, **caractérisée** en ce que le dressage est effectué au moyen d'un outil de dressage hélicoïdal diamanté (9), disposé au-dessus de l'axe de rotation de la meule (8), perpendiculairement à la droite reliant le centre de la meule au centre de la pièce.

3. Rectifieuse selon la revendication 1, **caractérisée** en ce que, pour rectifier une denture hélicoïdale, une avance ou un retard est superposé à l'entraînement de rotation de la pièce (6), au moyen d'un différentiel de direction d'hélice (14).